# EUROPEAN PATENT APPLICATION

(11) **EP 0 605 143 A2**
(43) Date of publication of application: **06.07.1994**
(21) Application number: 93310115.6
(22) Date of filing: 15.12.1993
(51) Int. Cl.: C08G 77/08

(54) **Process for the production of organosilicon compounds**

(30) Priority: 31.12.1992 GB 9227153
(71) Applicant: DOW CORNING LIMITED, South Glamorgan CF63 2YL Wales (GB)
(72) Inventor: Kolaczkowski, Stanislaw T., Bath (GB); Serbetcioglu, Serpil, Bath (GB)
(74) Representative: Vandamme, Luc Johan Roger

(57) **Abstract**

A process for making siloxane polymers by condensation, addition or equilibration polymerisation, comprises polymerising monomeric and/or oligomeric organosilicon compounds, by passing them over a heterogeneous polymerisation catalyst which is supported on or embedded in a monolithic catalyst support, preferably made of ceramic. Trickle flow reactors with inert co-current gas phase are preferred.

## Description

This invention is concerned with a process for the production of organosilicon compounds by polymerisation. More particularly the invention relates to a process for the production of organosilicon compounds by polymerisation of organosilicon monomers or oligomers using heterogeneous catalysis.

The production of organosilicon polymeric compounds, by the polymerisation or co-polymerisation of relatively low molecular weight organosilicon compounds, is a well known step in the manufacture of commercial silicones. This process has been extensively described, e.g. for the production of organopolysiloxanes, and may include equilibration, condensation and/or addition reactions.

Generally the polymerisation or co-polymerisation by equilibration is carried out by contacting cyclic organopolysiloxanes or low molecular weight siloxanols, or mixtures thereof, with an acidic or basic catalyst. Many substances which may be employed as catalyst have been described in the literature and include sulphuric acid, hydrochloric acid, Lewis acids, sodium hydroxide, potassium hydroxide, tetramethylammonium hydroxide, tetrabutylphosphonium silanolate, amines, phosphonitrile halide catalysts and others.

Polymerisation through condensation is also well known and may be achieved by reacting organosilicon compounds having silicon-bonded hydroxyl groups in the presence of condensation catalysts. Alternative condensation reactions include reaction of organosilicon compounds having silicon-bonded hydroxyl groups with organosilicon compounds having silicon-bonded alkoxy groups or silicon-bonded hydrogen atoms. Appropriate catalysts for each of these reactions are known to the skilled person and have been described in the art.

Polymerisation of organosilicon compounds may also be effected by addition reactions, e.g. of organosilicon compounds having silicon-bonded hydrogen atoms with compounds having olefinc or acetylenic unsaturated groups, e.g. vinyl, allyl or propargyl groups. Suitable catalysts here include noble metal catalysts and complexes thereof and have also been described extensively in the art.

A large number of suitable polymerisation catalysts for organosilicon compounds, although useful and effective, are soluble or dispersible in the reagents and/or reaction product, and require a separation or deactivation step at the end of the reaction. This becomes a particular disadvantage where a continuous polymerisation unit is desired. It is therefore desirable to provide a catalyst system which needs no deactivation or separation from the reaction products.

It is known to use heterogeneous catalysts, which generally consist of active species which are not soluble or easily dispersible in the reagents and/or reaction products, and which can therefore easily be separated, e.g. by filtration. A more attractive solution is the use of a catalyst which is bonded to a solid substrate, or if sufficiently insoluble, which forms a solid particle by itself and can hence be formed into a catalyst bed over which the reagents may be passed. Such catalysts or bonded catalysts may be formed into pellets and made into a catalyst bed, e.g. by stacking them in a reactor or enclosing them in a cage.

There is, however, a problem associated with the polymerisation of organosilicon compounds using heterogeneous catalyst beds. On the one hand there is a desire for a high surface area in order to optimise the reaction rate. This is best achieved by using a small particle size for the catalyst particles. On the other hand there is a need for maintaining an adequate throughput of reagents without creating the danger of flooding the catalyst bed of a trickle bed reactor. This is best achieved by increasing the particle size of the catalyst particles in the bed. Because of the contradictory requirements, a compromise particle size is usually chosen.

There is a need for providing a heterogeneous catalyst system in which the problem is alleviated, at least to some extent.

We have now found that the use of a monolithic catalyst support in combination with an appropriate heterogeneous catalyst allows for the polymerisation of organosilicon compounds to he achieved at reaction rates which are equivalent to traditional catalyst bed systems, but with an improved throughput rate. Alternatively at equivalent throughput rates, improved reaction rates can be achieved by the use of said monolithic catalyst supports.

Monolithic catalyst supports are known in the art and have been described in many publications, e.g. Advanced Materials in Catalysis, Materials Sciences Series, 77, p 293-324. They are, however, traditionally mainly used for gaseous reactions, e.g. in automotive emission control systems, as described e.g. in E.P. specifications 443 905 and 460 388. Some applications involving a liquid phase are also reported. These have been done in a three phase monolithic reactor and are limited in the prior art to hydrogenation reactions, including hydrogenation of aqueous nitrobenzoic acid, α-methylstyrene, 2-ethyl-hexenal and anthraquinones. Nothing in the prior art indicates that monolithic catalyst supports are useful in polymerisation reactions, especially of organosilicon compounds.

According to the invention there is provided a process for the production of organosilicon compounds which comprises polymerising organosilicon monomers, oligomers or a mixture of both, in the presence of a heterogeneous catalyst which is supported on or embedded in a monolithic catalyst support.

Polymerisation reactions which are included in the process of the invention include equilibration, condensation and addition reactions.

Organosilicon compounds, forming the monomers or oligomers in the process of the invention, may be organosilanes, homopolymers of organopolysiloxanes, silcarbanes, copolymers of organopolysiloxanes, silcarbanes and/or polysilanes or mixtures of two or more of these. The silicon-bonded organic substituents (R'') in the organosilicon compound may be monovalent hydrocarbon groups having from 1 to 14 carbon atoms, for example alkyl, aryl, aralkyl, alkaryl or alkenyl groups or monovalent substituted hydrocarbon groups having from 1 to 10 carbon atoms, for example amino-substituted alkyl or aryl groups, mercaptoalkyl groups, haloalkyl groups, esterified carboxyalkyl groups, polyoxyalkylene groups and hydroxyalkyl groups. Specific examples of suitable organic substituents which may be present in the organosilicon compounds employed in the process of the invention are methyl, ethyl, propyl, hexyl, dodecyl, tetradecyl, phenyl, xylyl, tolyl, phenylethyl, vinyl, allyl, hexenyl, -R'NH₂, -R'NHCH₂CH₂NH₂, -R'SH, -R'Br, -R'Cl and R'OH, wherein R' represents a divalent organic group, preferably having less than 8 carbon atoms, for example -(CH₂)₃- or -CH₂CHCH₃CH₂-, arylene, e.g. -C₆H₄- or aralkylene, e.g. -(C₆H₃.CH₃)-. For the majority of commercial applications at least 50% of the organic substituents will be methyl groups, any remaining groups being selected from vinyl and phenyl groups. More preferably at least 80% of all organic substituents are methyl groups, most preferably, substantially all organic substituents.

Silicon-bonded substituents other than the organic groups may be hydroxyl groups, hydrocarbonoxy groups, preferably alkoxy groups or hydrogen atoms. These substituents are very often the reactive groups on the organosilicon compounds. It will therefore depend on the type of reaction which is envisaged, e.g. addition or condensation reaction, as to which reactive group will be present. These groups are usually present in small amounts only. Particularly preferred in polymerisation reactions by condensation or addition are those organosilicon compounds in which the reactive groups are in terminal organosilicon units only. This will allow for the formation of linear polymers of increased chainlength. Particularly useful and preferred for such reactions are α,w-substituted organosilicon compounds, e.g. α,w-hydroxyl substituted dimethylsiloxane, α,w-divinyl substituted dimethylsiloxanes and α,w-dihydro substituted dimethylsiloxanes.

Organosilicon compounds for use in the process of the invention may vary widely, as indicated above. It is, however, preferred that for an equilibrium reaction the majority of organosilicon oligomers are cyclic or short chain organopolysiloxanes, the latter preferably having triorganosiloxane terminal units or diorganosiloxanol terminal units. Where equilibration reactions are envisaged, the organosilicon compounds comprise preferably cyclic organopolysiloxanes. These are well known and commercially available materials and have the general structure 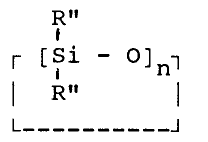
wherein R'' is as described above, and n has a value of from 3 to 8. Preferred are polydimethyl cyclosiloxanes wherein n has a value of 4 or 5. The organosilicon compounds which are useful in the case of an equilibration reaction also include short chain triorganosiloxane end-blocked diorganopolysiloxanes, end-blockers, e.g. hexaorgano disiloxane or hexaorgano disilazane. A mixture of these is often used and may be adapted to adjust the desired chain length of the end product.

For condensation reactions it is preferred that the organosilicon compounds comprise organopolysiloxanes having a number of silicon-bonded groups -OR per molecule, preferably at least two silicon-bonded -OR radicals, in which R represents a lower alkyl group having up to 6 carbon atoms or a hydrogen atom provided at least some of the R groups are hydrogen atoms. It is preferred that no more than two -OR groups are present on each molecule. This will encourage the formation of substantially linear polysiloxane materials. The preferred organosilicon compounds are short chain linear diorganopolysiloxane materials having silanol end-groups. These materials have the average general formula 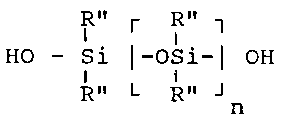
wherein each R'' denotes an organic group as hereinabove described and n is an integer, preferably having a value of no more than 100. As a general principle, however, an organosilicon compound which is a siloxane polymer is to be regarded as an oligomer for the purpose of this invention as long as it has a shorter siloxane chain length than the final product obtained by the process of the invention. In the preferred diorganopolysiloxanes, each R'' denotes a methyl group and n has a value of from 10 to 300, more preferably 20 to 150, most preferably from 40 to 100. These diorganopolysiloxanes are produced by hydrolysis and condensation of dihalodiorganosilanes and are commercially available materials. Organosilicon compounds having only one silicon-bonded group -OR may also be used and are particularly useful for terminating the polymer to be made with e.g. triorganosiloxane units.

Where polymerisation is envisaged with an addition reaction it is preferred that the organosilicon compounds comprise polysiloxanes having a number of, preferably at least two, silicon-bonded hydrogen atoms are reacted with compounds which have olefinic or acetylenic unsaturation. Preferably the latter compounds are also organosilicon compounds, most preferably organosiloxanes having silicon-bonded substituents with olefinic or acetylenic unsaturation. It is preferred that no more than two unsaturated groups are present on each molecule of the compound, preferably in the α,w position of the siloxane oligomer. This will encourage the formation of substantially linear polysiloxane materials. The preferred organosilicon compounds are short chain linear diorganopolysiloxane materials having vinyl end-groups. These materials have the average general formula 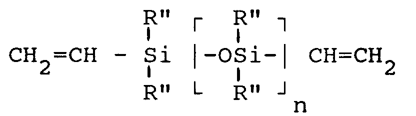
wherein each R'' denotes an organic group as hereinabove described and n is an integer, preferably having a value of no more than 100. As a general principle, however, an organosilicon compound which is a siloxane polymer is to be regarded as an oligomer for the purpose of this invention, as long as it has a shorter siloxane chain length than the final product obtained by the process of the invention. In the preferred diorganopolysiloxanes, each R'' denotes a methyl group and n has a value of from 10 to 300, more preferably 50 to 150, most preferably from 75 to 100. These diorganopolysiloxanes are produced by hydrolysis and condensation of dihalodiorganosilanes, and are commercially available materials. Hydrosilyl functional organosilicon compounds having silicon-bonded hydrogen atoms, may be silanes or siloxanes having at least two silicon-bonded hydrogen atoms. Preferably they are short chain siloxanes having from 2 to 10 silicon atoms in the chain, with up to one silicon-bonded hydrogen atom per silicon atom. Preferred are those with only terminal units having a silicon-bonded hydrogen atom as these materials will form linear polymers. Longer chain organopolysiloxanes having some silicon-bonded hydrogen atoms are, however, also suitable. The most preferred of these are α,w-hydrosiloxane substituted diorganopolysiloxanes.

In the process of the invention where a condensation reaction is used for the polymerisation, silanol end-blocked diorganopolysiloxanes of high viscosity may be produced. If desired, however, condensation products may be end-blocked with triorganosiloxy units. One method of effecting such end-blocking comprises incorporating a triorganoalkoxy silane or a triorganosilanol in the reaction mixture. A more preferred method of producing triorganosiloxy end-blocked diorganopolysiloxanes comprises the incorporation of diorganopolysiloxane materials, which are end-blocked with a triorganosiloxane group at one end and a hydroxyl diorganosiloxane group at the other end. An alternative way is the use of lower molecular weight diorganopolysiloxanes having triorganosiloxane end-groups. This requires usually the use of a catalyst which has some activity in the breaking of the siloxane Si-O-Si bond. Yet another alternative is the use of a silazane, e.g. hexamethyldisilazane. Suitable triorganosiloxane end-blocking units include a wide variety of materials, e.g. trimethylsiloxane, triethylsiloxane, dimethylvinylsiloxane and dimethylphenylsiloxane.

It is also possible to provide organosilicon compounds of different types so that a combination of different polymerisation reactions may be carried out at the same time, e.g. a condensation and equilibration reaction by mixing cyclic diorganopolysiloxanes and silanol end-blocked diorganopolysiloxanes.

The preferred process of the invention uses the condensation reaction and is suitable for use in the preparation of a variety of organosilicon products. If desired there may be included with the organosilicon compounds mentioned above other organosilicon compounds for example alkoxysilanes which are reactive with a silanol-containing reagent or condensation products to provide organofunctional or chain terminating groups. Examples of such silanes are trimethyl methoxy silane, methyl phenyl dimethoxy silane, methyl phenyl vinyl ethoxysilane and aminopropyl trimethoxy silane. The polymerisation products of the process of the invention may vary in viscosity depending on the reaction conditions. The process according to the invention is capable of producing polymers of any viscosity, e.g. from 100 mm²/s to up to 1,000,000 mm²/s or more. Resulting polymers are useful in a number of applications, as is well known in the art of organosilicon compounds. Examples of suitable applications include treatment of textile to render them water repellant, paper coating to impart high release surfaces, manufacture of sealant and adhesive products and production of elastomer-forming compositions.

The preferred process of the invention involves contacting the organosilicon compounds, which are monomers or oligomers, with a catalyst at a temperature at which the desired rate of polymerisation occurs. It is preferred for the production of organopolysiloxane materials that the temperature employed is in the range of from about 30°C to about 300°C. Reactions at lower temperatures are possible, but they are normally too slow to be of commercial interest. More preferably the polymerisation reaction is carried out at a temperature of from 50 to 200°C, most preferably 70 to 180°C. It is also preferred that the by-product formed during the condensation reaction is removed. This will cause the acceleration of the reaction and is suitably achieved by the use of an extraction system.

Potential catalysts are well known heterogeneous polymerisation catalysts. Examples of suitable condensation, addition or equilibration catalysts have been described in a number of publications and many are commercially available. Some catalysts will promote both condensation and equilibration reactions and may be used in either reaction or where a mixture of these reactions is required. Suitable catalysts are exemplified by acid clays, e.g. Tonsil®, ion exchange resins with acid loading, e.g Amberlyst® with sulphonic acid, metal catalysts, e.g. copper, cupric oxide, noble metal catalysts, e.g platinum metal, supported metal catalysts, such as platinum, rhodium, palladium, complexes thereof, e.g. supported onto carbon, aluminium oxide, carboxylates of rubidium or caesium, hydroxides of magnesium, barium or strontium, borates, acetates and phosphates, e.g. Ba(OH)₂, Sr(OH)₂, Na₂B₄O₇, CsOAc, Na₃PO₄, KBO₂ and other catalysts as mentioned in the art, e.g. in G.B. patent specification 2 256 872.

The process according to the invention requires the use of a monolithic catalyst support. Such monolithic catalyst supports are well known as stated above, and may be made from any material which will not react with any of the reagents, catalysts or reaction products except as stated below where the catalyst itself forms part of the monolithic catalyst support. Suitable materials include ceramics, metals, alloys, plastics, resins and even the heterogeneous catalyst itself or a mixture thereof with an inert binder, provided the above stated conditions of inertness of the non-catalyst matter are fulfilled. It is preferred to make the monolithic catalyst support of a material which will allow the catalyst to be deposited easily and uniformly on its surface. Particularly preferred for that purpose are ceramic monolithic catalyst supports, or those made from the catalyst or a combination of the catalyst and an inert binder. The most preferred monolithic catalyst supports are ceramic ones, consisting for example of an aluminosilicate material. Useful materials for making ceramic monolithic catalyst supports include natural clays, cordierite, zirconia, barium titanate and silicon carbide. Monolithic supports may be made in any of the well known manners. Ceramic monolithic catalyst supports are usually made by moulding, extrusion or corrugation methods, which methods are well known in the art and have been described in several publications.

The monolithic catalyst supports are composed of one or more channels. If more than one, these channels are usually parallel or at least substantially parallel to each other and may be circular, hexagonal, square, triangular or irregular in section. The shape of the section of the channels is not important, but is usually of a symmetric type as a result of the manufacturing process. The channel sections do not even have to have a consistent section for the total length of the channel. They may e.g. have an increasing diameter or an irregularly changing diameter over the length of the monolithic catalyst support. The use of the word diameter does not limit the channels to ones with circular sections, as it indicates only a measure of the hollow of the channel. Preferably however, the channels have a constant section shape and size for the total length of the monolithic catalyst support.

Suitable monolithic catalyst supports for use in the process of the present invention may have a channel diameter which is conveniently in the range of from 0.1 to 50mm, preferably from 1 to 30mm, more preferably from 3 to 10mm. The number of channels provided in the monolithic catalyst support may vary depending on the desired output of the polymerisation reaction, the available area in the reactor in which the support is to be placed and the feeding method and facilities of the reactor. It is, however, envisaged that the preferred total area of monolithic catalyst supports, measured in section, would be equivalent to that of a circle with a diameter in the range of from 150mm to 50,000mm, more preferably 500 to 5000mm, most preferably 1000 to 3000mm. It is also possible to run a number of reactors in parallel each containing a monolithic catalyst support. These parallel reactors may be placed in separate vessels or placed in a support within the same vessel, e.g. in a plate with several orifices, each of which adapted to receive a monolithic catalyst support.

The thickness of the monolithic catalyst support channel sides will effect the mechanical strength of the monolithic catalyst support. For ceramic monolithic catalyst supports it is preferred that the total bed voidage, i.e. the ratio of free space over space taken up by the material making up the support per unit of volume, is in the range of from 0.3 to 0.95, preferably from 0.5 to 0.8, most preferably 0.6 to 0.75.

The length of the monolithic catalyst support, i.e. its size in the direction of the flow of the reagents, could vary widely, depending on the required residence time of the reagents with the catalyst, the operating temperature, the activity of the catalyst, the density of the catalyst on the surface of the monolithic catalyst support, the desired outcome of the reaction and the physical properties of the reagents and/or the reaction product. It is usual to provide the monolithic catalyst support in blocks with limited length, e.g. from 5 to 1000mm, preferably 100 to 500mm, and to place a number of these blocks on top of each other. In this way it becomes possible to provide a monolithic catalyst support system with a number of channels with varying diameter throughout the reactor. It is for example conceivable to have smaller channel diameters at the top of the reactor, where the reagents enter the reactor, and to increase the diameter further down the reactor to accommodate a reaction product of increasing viscosity. It is expected that in commercial situations the total length of the monolithic catalyst supports used in the reactors would be in the range of from 150mm to 50,000mm, more preferably 500 to 5000mm, most preferably 1000 to 3000mm.

An alternative way to use monolithic catalyst supports is in spinning basket arrangements. In such arrangement relatively small lengths of monolithic catalyst supports are placed side by side, i.e. with parallel channels, inside a basket, e.g. of inert metal wiring. The basket is used more preferably in batch or semi-batch reactor set-ups. By spinning the basket when immersed in the reaction mixture the reagents are forced through the monolithic channels and thus come into contact with the catalyst. Additional agitation means may also be provided in such set-ups. It is also conceivable to make a self-supporting monolithic system equivalent to that placed inside a basket, but without the need to use a separate holding basket. This system could be supported onto a rotation means, e.g. a stirrer to perform the same function as the spinning basket. In yet another alternative set-up the basket or self-supported monolithic structure could be kept stationary, and the reagent mixture forced through it by pumping, agitation or other mechanical means. In view of the relatively short lengths of monolithic structures used it is advisable not to use these systems in continuous set-ups, as the contact time with the catalyst may not be sufficient without passing the reaction mixture many times over the monolithic supports. All these systems are referred to with the term spinning basket whenever used in this application.

It is possible to provide a monolithic catalyst support with at least a certain amount of porosity in the walls. The porosity of the walls may have beneficial effects, e.g. improved adhesion. This could be achieved by partially or totally embedding the catalyst in the walls. Desirability of such porosity is likely to be dependant on the type of catalyst used in the process of the invention. It is also possible to provide pores which are sufficiently large to allow some of the reagents to pass through them and there to have an increased contact time with the catalyst. However, porosity of monolithic catalyst supports is not likely to be of major importance in the process of the present invention for this latter reason as the polymerisation reaction tends to produce large molecules, and these are therefore likely to be too large to enter or stay in such pores.

The monolithic catalyst support may be loaded with the catalysts by any of the known ways which include catalyst incorporation during the manufacture of the monolithic catalyst supports, deposition of active material directly onto the monolithic catalyst support, washcoating, i.e. laying down a high surface area coating onto which the catalyst is deposited or depositing the washcoat and the catalyst at the same time. The most preferred preparation method for monolithic catalyst supports to be used in the process according to the invention is the coating of the catalyst from a slurry, by dipping the monolithic catalyst support in the slurry. It was found that the slurry could be made with a number of liquid materials but the most preferred material was a low boiling alcohol, e.g. ethanol. This coating method forms the subject of a separate patent application.

It is preferred to coat the monolithic catalyst support with the catalyst in such a way that a reasonably uniform coating of the catalyst is provided, i.e. where the loading of catalyst per unit area of the support is fairly constant on average. Although it is preferred to cover the surface of the monolithic catalyst support fully with the catalyst, a patchy or patterned coating could also be used. It is particularly preferred to provide a coating which is rough to some extent, as this would increase the surface area of the catalyst bed, and hence the reactivity of the loaded monolithic catalyst support. A minimum thickness of catalyst layer would be equivalent to a molecular monolayer of the catalyst. There is no theoretical maximum thickness of the catalyst layer, although practical considerations have to be taken into account. These include the remaining empty volume in the channels of the monolithic catalyst support, the adhesion strength of the catalyst to the support as well as any cost considerations. A preferred average thickness would be in the range of from 0.05 to 2mm, preferably 0.1 to 1mm. However, if the monolithic catalyst support is constructed of the catalyst material or of a combination of the catalyst material with an inert binder, then the thickness of the layer will be dependant on the shape and size of the monolithic catalyst support. The loading of the monolithic catalyst support (i.e. weight percentage of catalyst based on the total weight of the monolithic catalyst support) may be as high as 100% in such cases.

In the most preferred reactor set-up the monolithic catalyst support is used in a continuous system whereby the reagents are fed at one end, and the reaction product collected at the other end of the monolithic catalyst supports, preferably in a substantially vertical reactor set-up where the force of gravity can be used to aid the process. The reactor may be used in flooded flow or in trickle flow mode. Some of the additional advantages of the use of monolithic catalyst supports in the process of the invention in comparison with the use of conventional packed pellet beds include reduced channelling, resulting in a more uniform residence time and better contacting with the catalyst and the reduced pressure drop over the length of the reactor. These advantages will apply to flooded flow mode as well as to trickle flow mode. Additionally in a three phase system, i.e. where apart from the solid catalyst/support phase there is a liquid phase and a gaseous or vapour phase, there is the advantage of improved mass transfer, e.g. from the liquid phase to the vapour or gaseous phase. This becomes particularly useful in the case of condensation reactions where the by-product of the polymerisation is a very volatile material, e.g. water at the reaction temperature. For such three-phase systems the mass transfer is possible in any system, i.e. flooded flow, two-phase flow or trickle flow. In flooded flow the voidage of the catalyst bed is at least to a large extent filled with the reaction mixture. In trickle flow the reaction mixture is flowed along the surface of the catalyst, i.e. on the walls of the monolithic supports in the process of the invention, leaving the centre part of the monolith's channels free from reagents. In two-phase flow a mixture of liquid reagents and gas, e.g. inert nitrogen, is pushed through the catalyst bed and in the process of the invention may cause a variety of hydrodynamically stable two-phase flow patterns, for example bubble flow, slug flow, Taylor flow or annular flow as described e.g. in Catal. Rev. Sci. Eng, 30(3), 361. However, when a larger amount of mass is to be transferred to the vapour or gas phase it becomes more desirable to use the two-phase flow or trickle flow, most preferably the latter one. The use of trickle flow creates a larger area of vapour or gas phase, and therefore encourages the transfer of mass from the liquid phase to that phase. This will also help e.g. to encourage the condensation reaction between silanol containing organosilicon compounds to take place, as the resulting by-product of water will be removed more quickly, thus driving the reaction towards condensation. Where no volatile by-products are generated, and thus a two-phase reaction (i.e. liquid reagents and reaction mixture and solid catalyst) is taking place, e.g. in the addition polymerisation reaction, flooded flow or another hydrodynamically stable two-phase flow pattern is acceptable. However, it is still preferred to use trickle flow as this has the additional advantage over flooded flow of having a further reduced pressure drop over the length of the reactor.

Trickle flow is achieved by allowing the reaction mixture to flow over the walls of the monolithic catalyst support at a rate which will not cause any flooding of a channel of the monolith, although small amounts of temporary flooding or liquid contact across the channels is allowable. Feeding the reaction mixture may be done via a distributor e.g. a perforated pipe or a spray device. It is important that the flow rate is controlled and kept below a level where flooding would result. Actual flow rates will depend on the size of the monolith channels, the viscosity of the reagents and the size of the drops with which the reaction mixture is dispersed. Careful feeding of the mixture will ensure full wetting of the channel surfaces of the monolithic catalyst support, which in turn ensures good contact with the catalyst itself.

It is preferred that the vapour or gas phase of the reactor is provided by an inert gas, for example nitrogen. This will avoid any unwanted side reactions or any degradation of the catalyst, e.g. by oxidation. If no gas phase is used it is possible to create a vapour phase from the reaction product itself, e.g. in the condensation reaction referred to above a vapour phase could be created by the water by-product of the reaction. It is, however, preferred that an inert gas is used to form a separate phase, especially nitrogen. This may be supplied at increased temperatures, e.g. matching the reaction temperatures. The gas may be supplied co-currently with the reaction mixture or counter-currently. It is preferred that the gas is supplied co-currently, i.e. in the same flow direction as the reagents as this will reduce the risk of the gas pushing against the downward flow of the reagents, and thus causing the reaction mixture to contact across the channels of the monolithic catalyst support or even causing flooding of the catalyst bed. It is also preferred to provide some extraction system, e.g. by reduced pressure or vacuum, in order to remove any volatile by-products of the reaction.

The advantages of the process of the present invention over the prior art heterogeneous catalyst beds include the reduced pressure drop over the reactor, especially where trickle flow is used, resulting in a potentially higher throughput rate. Another advantage lies in the reduction of channelling, resulting in a more uniform flow rate, catalyst contact time and hence a more controllable reaction in terms of product. Yet another advantage lies in the ease of loading the catalyst to the reactor. This is due to the relatively large size of the monolithic catalyst supports. Due to the high compressive strength of the monolithic catalyst supports, deep beds can be constructed without the necessity of using intermediate supports and gas-liquid redistributors which greatly reduces the capital costs. Where three phase reaction is used a better mass transfer is achieved with the monolithic catalyst supports than with the standard pellet beds, as the gas and vapour phases are much more easily accessible. This is again particularly true for the trickle flow reactor. Because of the physical form of the monolithic catalyst support the process of the invention will also minimise the particle attrition and carry over, i.e. formation of small particles from the catalyst bed, which may find their way into the reaction product.

The use of monolithic catalyst supports for liquid polymerisation has never been suggested or used before. It is an additional advantage that the reactor using such monolithic catalyst supports can be adjusted to the particular reaction requirements. In the case of condensation of silanol end-blocked diorganopolysiloxanes, the reaction tends to be fairly rapid in the initial stages, due to the large amount of silanol groups present in the reaction mixture. This may cause a lot of turbulence and vapour generation which may in turn cause the reaction mixture to flood the catalyst bed. Where it is desired to avoid this, e.g. for reasons discussed above in the use of trickle flow, a monolithic catalyst support can be used with relatively larger channel sizes to avoid that the reaction mixture will wet the monolithic catalyst across the channels. This may be followed by a monolithic block with narrower channels further down the reactor where the reaction will be less violent. As the reaction mixture goes down the reactor, and polymerisation is further effected, the reaction product will tend to be of increasing viscosity. This could be accommodated by placing a number of monolithic catalyst supports on top of each other with ever increasing channel sizes, in order to avoid flooding or blocking of the channels by the higher viscosity polymers. The higher channel sizes will be placed downstream from the ones with smaller channel sizes.

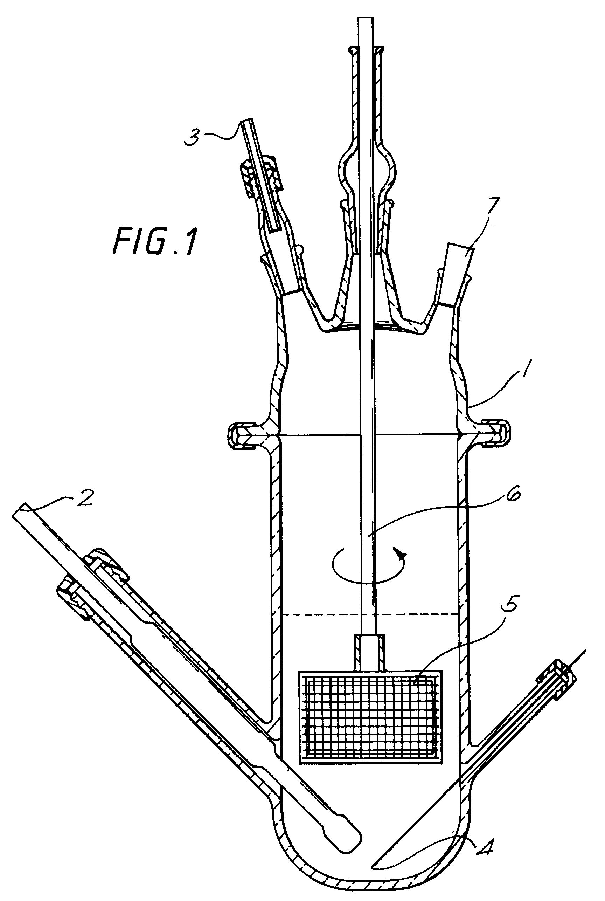

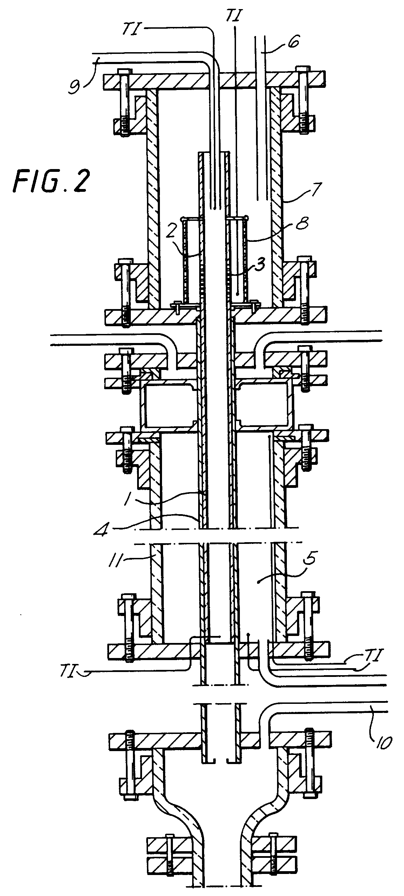

There now follows a number of examples in which the invention is illustrated in more detail, and are to be read in conjunction with the figures, of which Figure 1 gives a cross-section of a spinning basket semi-batch reactor and Figure 2 a cross-sectional view of the continuous reactor.

### Example 1

### Use of Spinning Basket System in Semi-Batch

### Polymerisation Reaction (Figure 1).

A number of monolithic catalyst support rings were made from Pormulit® alumina silicate, having an inner diameter of 15mm, a channel wall thickness of 2.5mm and a length of 7mm. The monolithic catalyst supports were coated with tripotassium phosphate catalyst by washing the monolithic catalyst support rings with distilled water, drying them for 2 hours at 120°C and dipping them in a slurry of 10g catalyst in ethanol, which was 87% by weight pure, and drying the coated rings in a nitrogen atmosphere at room temperature and 120°C. The monolithic rings have a specific surface area of 2 m²/g and a catalyst loading of 25% by weight.

A vessel (1), provided with a nitrogen inlet (2) close to the bottom of the vessel, a vacuum outlet (3), a thermocouple (4) and spinning basket (5) fixed to a stirrer (6), was placed in a heating mantle. The spinning basket (5) was made of brass and stainless steel wiring, which was initially tested for inertness versus reagents, catalyst and reaction products. The basket (5) was filled with a number of the coated monolithic catalyst support rings as described above which were placed in it side by side, with the ring openings facing out from the basket.

One litre of an α,w-dimethylsilanol polydimethyl siloxane having a viscosity at 25°C of 250 mm²/s was charged into the vessel, and was brought up to a temperature of 140°C. The catalyst basket was then lowered into the fluid, at which point the vacuum pump was started and the nitrogen purge was initiated into the system. The basket was rotated at 220 rpm and the reaction was followed for 60 minutes. At the initial stages some foaming was observed at the catalyst indicating that the condensation reaction was proceeding at a high rate. Every 10 minutes a sample was taken through the sample port (7) and analysed for Si-OH content by titration with lithium aluminium dibutylamide, using 4-phenylazodiphenylamine as indicator, to evaluate the progress of the condensation reaction. The final viscosity of the reaction product was 1000mm²/s. From kinetic studies it was observed that the reaction occurs on the surface area of the catalyst and that the reaction is overall first order with respect to the concentration of Si-OH. The reaction rates were measured.

### Comparative Example 1.

The experiment of Example 1 was repeated, with the difference that the spinning basket was filled with standard pellets of the same catalyst. The pellets had an average diameter of from 3 to 5mm and were irregular in shape. The catalyst loading was a lot higher, the specific surface area was 14 m²/g and, from the kinetic studies, it was clear that there was a very much higher reaction rate potential for the monolithic catalyst support system of Example 1 than for this traditional pellet bed.

### Example 2

### Use of Single-Channel Monolith Trickle Flow

### Polymerisation Reaction (Fig.2).

A monolithic catalyst support tube (1) was made from Pormulit® alumina silicate, having an inner diameter of 15mm, a channel wall thickness of 2.5mm and a length of 740mm. The monolithic catalyst support (1) was coated with tripotassium phosphate catalyst by washing the monolithic catalyst support tube (1) with distilled water, drying it for 2 hours at 120°C and pouring through it a slurry of 15g catalyst in ethanol, which was 87% by weight pure, to coat the inside of the channel to a height of 500mm and drying the coated tube (1) in a nitrogen atmosphere at room temperature and 100°C, giving a total coated surface area of 0.0234 m² for 15g of catalyst. The surface of the monolithic tube (1) where coated has a certain degree of roughness. The top 240mm of the tube (2) were left uncoated and had a distributor aspect in the sense that 1mm holes (3) were drilled in it at 2mm intervals to encourage uniform wetting of the inside channel surface of the monolithic tube (1).

Inside a reactor (11) the catalyst coated ceramic tube (1) was housed inside a stainless steel tube (4) which was maintained at the desired operating temperature of 140°C by a heat exchange fluid (5). The temperature of reagents, reaction product and reactor chamber was measured by temperature indicators (TI). The siloxane material used in Example 1 was fed continuously in trickle flow mode through inlet (6) into a distributor (7) from a heated reservoir (not shown) at speeds varying from less than 7 x 10⁻⁷ m³/s to higher rates. The reaction temperature was initially gradually raised to the desired 140°C. In order to ensure uniform circumferential distribution of the liquid around the monolithic catalyst support (1), a fine mesh, stainless steel gauze (8) was positioned around the tube (1) and in front of the inlet feed line. The reagent entered the coated monolith tube through the 1mm holes (3), thus wetting the inside channel surface of the tube (1) uniformly. A co-current nitrogen stream was fed into the reactor through inlet (9) at the same time. The outlet of the reactor was equipped with a vacuum outlet (10) linked to condensers (not shown) through which the water and gases were removed. The progress of the reaction was followed by measuring the Si-OH content of the reaction product. It was found that at lower flow rates (i.e. below 7 x 10⁻⁷ m³/s) the mass transfer affected the reaction rate, whereas at higher flow rates variations had very small effects on the reaction rate. Again condensation was seen to be very quick at the top of the reactor where the Si-OH content was high. Condensation went very well and viscosities of up to 1000mm²/s were achieved when passing the reaction mixture over the monolith tube to achieve the equivalent of a 2000mm reactor length.

## Claims

1. A process for the production of organosilicon compounds which comprises polymerising organosilicon monomers, oligomers or a mixture of both, in the presence of a heterogeneous polymwrisation catalyst characterised in that the catalyst is supported on or embedded in a monolithic catalyst support.

2. A process according to Claim 1 further characterised in that the polymerisation of the organosilicon monomers, oligomers or a mixture thereof is selected from polymerisation by equilibration of organosilicon compounds which comprise cyclic organopolysiloxanes, polymerisation by condensation of organosilicon compounds which comprise polysiloxanes having at least two silicon-bonded -OR groups per molecule, wherein R represents a hydrogen atom or a lower alkyl group having up to 6 carbon atoms and polymerisation by addition reaction of organosilicon compounds which comprise organosiloxanes having at least two silicon-bonded hydrogen atoms per molecule and organosiloxanes having silicon-bonded substituents with olefinic or acetylenic unsaturation.

3. A process according to Claim 1 or 2 further characterised in that the monolithic catalyst support is selected from those made from a ceramic material, those made from a polymerisation catalyst itself, and those made from a combination of a polymerisation catalyst and a binder.

4. A process according to any one of the preceding claims further characterised in that the monolithic catalyst support has at least one channel with a diameter in the range of from 1 to 30mm and in that the ratio of free space in the monolithic catalyst support over space taken up by the material making up the support per unit of volume, is in the range of from 0.5 to 0.8.

5. A process according to any one of the preceding claims further characterised in that the total area of the monolithic catalyst support in section is equivalent to that of a circle with a diameter of from 500 to 5000mm and in that the total length of the monolithic catalyst supports used in the reactors is in the range of from 500 to 5000mm.

6. A process according to any one of the preceding claims further characterised in that the process is carried out at a temperature of from 30 to 300°C.

7. A process according to any one of the preceding claims further characterised in that the monolithic catalyst support is used in a spinning basket set-up in a batch or semi-batch reactor.

8. A process according to any one of Claims 1 to 6 further characterised in that the monolithic catalyst support is used in a continuous reactor.

9. A process according to any one of the preceding claims further characterised in that the monolithic catalyst support has a substantially uniform loading of catalyst per unit area of the support.

10. A process according to any one of Claims 1 to 6, 8 or 9 further characterised in that the reactor is used in trickle flow mode or in 2-phase flow mode.

11. A process according to any one of Claims 1 to 6 or 8 to 10 further characterised in that an inert gas is used to provide a gas phase which is added co-currently with the reaction mixture.

12. A process according to any one of Claims 1 to 6 or 8 to 11 further characterised in that a number of monolithic catalyst supports are placed on top of each other, each support having a differing channel size from the adjacent support.
